(19) Europäisches Patentamt
European Patent Office
Office européen des brevets

(11) Veröffentlichungsnummer : **0 047 913**
**B1**

(12) **EUROPÄISCHE PATENTSCHRIFT**

(45) Veröffentlichungstag der Patentschrift :
25.07.84

(51) Int. Cl.³ : **C 08 J 11/00// C08L75/08**

(21) Anmeldenummer : **81106792.5**

(22) Anmeldetag : **31.08.81**

(54) **Verbessertes Verfahren zur Auftrennung von Polyurethan-Hydrolysaten in Polyether und Diamin.**

(30) Priorität : **13.09.80 DE 3034680**

(43) Veröffentlichungstag der Anmeldung :
**24.03.82 Patentblatt 82/12**

(45) Bekanntmachung des Hinweises auf die Patenterteilung : **25.07.84 Patentblatt 84/30**

(84) Benannte Vertragsstaaten :
**BE DE FR GB IT**

(56) Entgegenhaltungen :
**EP-A- 0 013 350**
**FR-A- 2 283 766**
**US-A- 4 143 072**

(73) Patentinhaber : **BAYER AG**
**Konzernverwaltung RP Patentabteilung**
**D-5090 Leverkusen 1 Bayerwerk (DE)**

(72) Erfinder : **Niederdellmann, Georg, Dr.**
**Heinestrasse 6**
**D-4047 Dormagen (DE)**
Erfinder : **Roemer, Norbert, Ing.-grad.**
**Hamerweg 128**
**D-4050 Mönchengladbach (DE)**
Erfinder : **Schenk, Jürgen, Ing.grad.**
**Neusser Strasse 62**
**D-4047 Dormagen 11 (DE)**
Erfinder : **Hetzel, Hartmut, Dr.**
**Lübecker Strasse 13**
**D-5000 Köln 40 (DE)**
Erfinder : **Grigat, Ernst, Prof. Dr.**
**Am Domblick 13**
**D-5090 Leverkusen 3 (DE)**

## Beschreibung

Es sind eine Reihe von Verfahren bekannt, durch hydrolytischen Abbau Polyurethanschaumstoff-Abfälle zu einem Gemisch aus Ausgangspolyol und jenem Diamin zu spalten, welches dem bei der Schaumstoffherstellung verwendeten Diisocyanat zugrunde liegt. Vor einer erneuten Verwendung im Produktionsprozeß muß dieses Hydrolysatgemisch in die Polyol- und Diaminkomponente zerlegt werden.

Ein technisch sinnvolles Trennverfahren soll wirtschaftlich arbeiten, keine hohen Investitionskosten erfordern und die isolierten Rohstoffe in einer ohne aufwendigen Reinigungsprozeß wiederverwendbaren Form liefern. Dies gilt hinsichtlich der gegen Störeinflüsse sehr empfindlichen, diffizilen Rezepturen für Polyurethan-Weichschaumstoffe in besonderem Maße für die Qualität aus Hydrolysaten wiedergewonnener Polyetherpolyole, die in den Verschäumungsprozeß zurückgeführt werden sollen.

Für die Auftrennung des Hydrolysatgemisches wurden bisher im wesentlichen Destillations- und Flüssigextraktionsverfahren in verschiedenen Modifizierungen angewandt. Das Destillationsverfahren liefert mit guter Ausbeute und hoher Reinheit die Diaminkomponenten zurück ; der als Destillationsrückstand anfallende Polyether ist jedoch in der vorliegenden Form für eine direkte Wiederverschäumung unbrauchbar (Environmental Science and Technology, Vol. 8, Nr. 2, Febr. 1974, Seite 138).

Beim Flüssigextraktionsverfahren, wie es z. B. die DE-Auslegeschrift 2 207 379 beschreibt, nimmt man das Hydrolysat in Toluol oder einem anderen organischen Lösungsmittel auf und extrahiert das Diamin mit verdünnter, wäßriger Salzsäure. Die begrenzte Löslichkeit des Diaminhydrochlorids erfordert ein beträchtliches Volumen an verdünnter Säure, welches aus dem Extrakt wieder destillativ entfernt werden muß. Hinzu kommt, daß die bei der Schaumstoffherstellung mitverwendeten Stabilisatoren und Emulgatoren die Trennung der organischen und wäßrigen Phase sehr erschweren.

Die US-Patentschrift 4 035 314 beschreibt die Wiedergewinnung von Polyurethanrohstoffen durch Hydrolyse von Kunststoff-verbundmaterialien des Automobilsektors. Dabei wird, nachdem das im wesentlichen aus Polytetrahydrofuran und Diamin bestehende Polyurethanhydrolysat mit Hilfe eines organischen Lösungsmittels von den nicht hydrolysierbaren Kunstoffen abgetrennt wurde, solange Chlorwasserstoffgas in die Hydrolysatlösung eingeleitet, bis kein Aminhydrochlorid mehr ausfällt. Nach Abfiltrieren des Aminhydrochlorids, sowie Abziehen des Lösungsmittels und überschüssigen Chlorwasserstoffs erhält man einen Regeneratpolytetrahydrofuran-Ether, der mit Toluylendiisocyanat zu einem Prepolymer umgesetzt wird, welches im Verschnitt mit reinem Prepolymer mit 4,4'-Methylendianilin zu einem Elastomeren ausgehärtet werden kann. Für die Schaumstoffherstellung eingesetzte $C_2$-/$C_3$-Polyether lassen sich nach US 4 035 314 nicht quantitativ vom Diamin trennen ; man erhält für die Verschäumung unbrauchbare $C_2$-/$C_3$-Regeneratpolyether.

Die DE-Offenlegungsschrift 2 854 940 beschreibt ein Trennverfahren, welches zu einwandfrei verschäumbaren, praktisch aminfreien $C_2$-/$C_3$-Regeneratpolyethern führt und dadurch gekennzeichnet ist, daß man die Aminhydrochloridfällung fraktioniert, d. h. in mehreren Teilschritten durchführt, wobei man jeweils das ausgefällte Aminsalz vor der weiteren Chlorwasserstoffeinleitung von der Reaktionslösung abtrennt und eine quantitative Aminhydrochloridabscheidung mit überschüssigem Chlorwasserstoff erst dann durchführt, wenn der Amingruppengehalt des Polyethers unter 1,0 Gew.-% liegt. Auf diese Weise erreicht man eine wirksame Unterdrückung der Bildung störender Mengen an polyetherlöslichem Amindihydrochlorid, die bei höheren Aminkonzentrationen, z. B. bei Anwendung der US-Patentschrift 4 035 314 auf ein Polyurethan-Schaumstoffhydrolysat zu beobachten ist. Die DE-Offenlegungsschrift 2 854 940 erfordert naturgemäß eine exakte quantitative Kontrolle der in die Hydrolysatlösung eingeleiteten HCl-Menge und eine analytische Kontrolle des Amingehaltes der einzelnen Verfahrensstufen.

Aufgabe war es nun, ein wirtschaftliches und betriebssicheres Verfahren zu finden, das ohne hohen analytischen Kontrollaufwand eine Auftrennung von Polyurethanhydrolysaten in wiederverschäumbare, praktische aminfreie Polyether und Diamine gestattet.

Die Aufgabe wurde dadurch gelöst, daß man das bei der Hydrolyse von Polyurethanabfällen mit Temperaturen von etwa 200 bis 250 °C anfallende, heiße Hydrolysat unmittelbar, ohne Mitverwendung von leicht flüchtigen Komponenten wie Wasserdampf, vorzugsweise jedoch in Gegenwart von 1-15 Gew.-%, vorzugsweise 3-6 Gew.-% eines hochsiedenden Lösungsmittels, dessen Siedepunkt 50-150 °C, vorzugsweise 80-120 °C, unterhalb des Siedepunktes des auszudampfenden Diamins liegt und dessen Dampfdruck bei der Kondensationstemperatur des auszudampfenden Diamins das 10-fache, vorzugsweise das 2-fache des in der Verdampferanlage angestrebten betriebsdrucks nich überschreitet, in einen auf 180-300 °C, vorzugsweise 200 bis 250 °C beheizten Schlangenrohrverdampfer, an dessen Ende ein Druck von 0,1 bis 20 mbar anliegt, eindüst, wobei die Hauptmenge des Diamins verdampft und der Amingruppengehalt des Hydrolysatpolyethers unter 1 Gew.-% absinkt, so daß eine einstufige, quantitative Aminhydrochlorid-Abscheidung durch Einleitung von überschüssigem Chlorwasserstoff möglich ist und wiederverschäumbare Polyether-vorzugsweise $C_2$- und/oder $C_3$-Polyether erhalten werden.

Gegenstand der Erfindung ist somit ein verbessertes Verfahren zur Auftrennung von Polyurethan-Hydrolysaten, vorzugsweise Polyurethanschaumstoff-Hydrolysaten, in praktisch aminfreie, verschäumbare Polyether und Diamine, dadurch gekennzeichnet, daß man

A) das in an sich bekannter Weise in einer kontinuierlich arbeitenden Schneckenmaschine erhaltene, heiße Polyurethanhydrolysat kurz auf Normaldruck oder im Vakuum entspannt und ohne Mitverwendung leicht flüchtiger Komponenten,

jedoch gegebenenfalls unter Zugabe von 1-15 Gew.-%, vorzugsweise 3-6 Gew.-%, eines hochsiedenden Lösungsmittels, dessen Siedepunkt 50-150 °C, vorzugsweise 80-120 °C, unterhalb des Siedepunktes des auszudampfenden Diamins liegt und dessen Dampfdruck bei der Kondensationstemperatur des auszudampfenden Diamins das 10-fache, vorzugsweise das 2-fache des in der Verdampferanlage angestrebten Betriebsdrukkes nicht überschreitet,

unmittelbar und vorzugsweise kontinuierlich in einen auf 180 bis 300 °C, vorzugsweise auf 200-250 °C beheizten Schlangenrohrverdampfer einspeist, an dessen Ende ein Druck von 0,1 bis 20 mbar, vorzugsweise 1 bis 10 mbar, anliegt ; in einem nachgeschalteten Zyklon das nunmehr weniger als 1 Gew.-% $NH_2$ enthaltende Hydrolysat von der Hauptmenge des verflüchtigten Diamins und der Gesamtmenge des mitverwendeten Lösungsmittels sowie über eine anschließende Destillationskolonne, gegebenenfalls ohne weitere Wärmezufuhr das Diamin von mitverwendeten Lösungsmittel trennt,

B) durch Einleitung von überschüssigem Chlorwasserstoff in das gegebenenfalls mit inerten Lösungsmitteln verdünnte, weniger als 1 Gew.-% $NH_2$ enthaltende Hydrolysat noch vorhandenes Diamin quantitativ als Hydrochlorid ausfällt und

C) nach Abfiltrieren des ausgefällten Aminsalzes den gewonnenen Regeneratpolyether unter vermindertem Druck von inertem Lösungsmittel und überschüssigem Chlorwasserstoff befreit.

Als Polyurethan-Ausgangsstoffe können alle Polyetherurethane in homogener, zelliger oder vorzugsweise geschäumter Form dienen. Die größte wirtschaftliche und mengenmäßige Bedeutung haben dabei diejenigen Ether, die durch Polymerisation von Propylenoxid ($C_3$-Ether) in reinen oder Mischpolymerisat-Form mit z. B. Ethylenoxid ($C_2$/$C_3$-Ether) in linearer oder verzweigter Form durch Anlagerung an vorzugsweise zwei- oder mehrwertige Glykole oder Amine erhalten werden. Für solche Regeneratpolyether ist eine weitgehende Aminentfernung aus dem Hydrolysat besonders zwingend notwendig, wenn man sie wieder für die Schaumstoffherstellung verwenden will. Das Verfahren ist jedoch auch für solche Polyether anwendbar, die auf Basis von Polytetrahydrofuran aufgebaut sind.

Als Diamine werden besonders die isomeren Toluylendiamine isoliert. Aber auch die Diamine der Diphenylmethan-2,4'- und/oder 4,4'-reihe (einschließlich der Alkyl-Derivate) und das Naphthylen-1,5-diamin sind mögliche Verfahrensprodukte. Die Isolierung aliphatischer Diamine wie 1,6-Hexandiamin, Dicyclohexylmethan-4,4'-diamin oder Isophorondiamin ist wegen ihres mengenmäßig relativ geringen Einsatzes in Form ihrer entsprechenden Diisocyanate weniger interessant, jedoch möglich.

Die Gewinnung von Polyurethan-Hydrolysaten kann in an sich bekannter Weise erfolgen, vorzugsweise wird die Hydrolyse entsprechend der DE-OS-2 442 387 in einer kontinuierlich arbeitenden Schneckenmaschine bei ca. 180 bis 270 °C, vorzugsweise 200 bis 250 °C vorgenommen. Das erhaltene, heiße Polyurethanhydrolysat wird vorzugsweise kontinuierlich kurz auf Normaldruck oder in schwaches Vakuum entspannt, wobei Wasserdampf und sehr leicht flüchtige Bestandteile entfernt werden. Das noch immer heiße Hydrolysatgemisch wird sodann unmittelbar, vorzugsweise kontinuierlich, in den auf ca. 180 bis 300 °C, vorzugsweise 200 bis 250 °C beheizten Schlangenrohrverdampfer eingezogen, an dessen Ende ein Druck von 0,1 bis 20 mbar, vorzugsweise von 1 bis 10 mbar, anliegt. In einem nachgeschalteten Zyklon wird das weniger als 1 Gew.-% $NH_2$ enthaltende Polyetherhydrolysat von der Hauptmenge des verflüchtigten Diamins getrennt.

Die Mitverwendung von 1 bis 15 Gew.-%, vorzugsweise von 3 bis 6 Gew.-%, eines hochsiedenden Lösungsmittels, dessen Siedepunkt 50 bis 150 °C, vorzugsweise 80 bis 120 °C unterhalb des Siedepunktes des auszudampfenden Diamins liegt und dessen Dampfdruck bei der Kondensationstemperatur des auszudampfenden Diamins das 10-fache, vorzugsweise das 2-fache des in der Verdampferanlage angestrebten Betriebsdruckes nicht überschreitet, zusammen mit dem Polyurethanhydrolysat im Schlangenverdampfer bringt einen deutlichen Vorteil hinsichtlich der weiteren Absenkung des $NH_2$-Gehaltes im Regeneratpolyether gegenüber der Schlangenrohrverdampfung ohne Mitverwendung solch hochsiedender Lösungsmittel. Ein derartig niedriger Amingehalt ist für das Ergebnis der einstufigen Chlorwasserstoff-Fällung in Stufe B sehr vorteilhaft.

Geeignete hochsiedende Lösungsmittel für das Verfahren der Erfindung sind beispielsweise Anilin, Dekalin, Benzylalkohol, o-Dichlorbenzol und niedermolekulare, geradkettige oder verzweigte, gegebenenfalls von Heteroatomen unterbrochene Glykole. Besonders bevorzugte Lösungsmittel sind Ethylenglykol, 1,2-Propylenglykol, 1,3-Trimethylenglykol, 1,3-Butandiol, 1,4-Butandiol, Diethylenglykol und Anilin. Werden diese hochsiedenden Lösungsmittel im Verfahren verwendet, so gehen sie bei der Abscheidung im Zyklon (ca. 200-250 °C) dampfförmig mit dem Diamin über den Kopf des Zyklons ab und werden über eine nachgeschaltete Destillationskolonne oberhalb des Diamin-Schmelzpunktes gegebenenfalls ohne weitere Energiezufuhr kontinuierlich von Diamin getrennt.

Die im erfindungsgemäßen Verfahren in der Stufe A zum Einsatz gelangenden Schlangenrohrverdampfer sind als geeignete Apparaturen für das Eindampfen von Lösungen eines Feststoffes bzw. zum Entfernen leicht flüchtiger Bestandteile aus Stoffgemischen bekannt (CIT 42, 1970, S. 349/354 ; DE-AS 1 667 051 ; DE-AS 1 921 045). Sie bestehen aus einem abschnittsweise heizbaren, gewendelten, abwärts steigenden Rohr, in welches die flüssigen Ausgangsprodukte von oben eingespeist werden. Am Eintritt in den Schlangenrohrverdampfer wird eine Zweiphasenströmung erzeugt, wobei die Gasphase durch Entspannungsverdampfung hinter einer Drossel gebildet wird. Infolge der hohen Strömungsge-

3

schwindigkeit der Gasphase entsteht in dem stetig gewendelten Rohr unter Einwirkung der Zentrifugalkräfte eine turbulente, dünnschichtige Ringströmung des Produktgemisches, wobei die Flüssigkeit an der Rohrwand und das Gas im Rohrinneren strömen. Infolge der zusätzlich quer dazu fließenden Zirkularströmung zwischen Rohrwand und Flüssigkeitsoberfläche findet ein intensiver Wärmeaustausch zwischen der beheizten Rohrwand, der Flüssigkeit und dem Gas bei gleichzeitigem intensivem Stoffaustausch zwischen Flüssigkeit und Gasphase statt. Am Austritt des Schlangenrohrverdampfers können Gasgeschwindigkeiten bis knapp unterhalb der Schallgeschwindigkeit auftreten.

Bei den bisher bekannten Verfahren zur Entfernung leicht verdampfbarer Bestandteile, z. B. Lösungsmittel oder Restmonomer, mittels eines Schlangenrohrverdampfers muß in den Produktgemischen eine relativ hohe Menge an leicht flüchtigen Bestandteilen enthalten sein, damit der für den Ablauf des Verfahrens notwendige Gasstrom erzeugt wird.

Die DE-Offenlegungsschrift 2 719 968 schlägt daher zur Entfernung von Restbestandteilen aus einem flüssigen Polymeren mit Hilfe eines Schlangenrohrverdampfers die Mitverwendung von 10-90 Gew.-% Fremddampf, vorzugsweise Wasserdampf, und/oder Inertgas, vorzugsweise Stickstoff, bei Drücken zwischen 50 mbar und 1 bar vor. Die DE-Offenlegungsschrift 2 755 089 beschreibt ein Verfahren zur Reinigung von Polyethern von störenden Nebenprodukten, insbesondere niedermolekularen Glykolen und geruchsintensiven Stoffen mit Hilfe eines Schlangenrohrverdampfers, wobei als wesentliches Merkmal ebenfalls die Mitverwendung von 1-20 Gew.-% Wasserdampf angegeben wird.

Die Abtrennung von Diaminen aus Polyurethanhydrolysaten im Schlangenrohrverdampfer unter Mitverwendung von Wasserdampf oder Treibgas erwies sich jedoch als unbefriedigend, da das für die Ausdampfung der hochsiedenden Diamine erforderliche Vakuum in Gegenwart leichtflüchtiger Fremdkomponenten ohne erheblichen technischen Aufwand (z. B. Einsatz solegekühlter Kondensatoren für den Wasserdampf) nicht zu realisieren war und darüberhinaus die Sublimationsneigung des Diamins, besonders im Falle des bevorzugten Toluylendiamins, zu Störungen infolge verstopfter Vakuumleitungen führte (s. Beispiel 2). Es war aufgrund der vorliegenden Kenntnisse völlig überraschend, daß sich mit Hilfe eines Schlangenrohrverdampfers ohne Mitverwendung leichtflüchtiger Komponenten in einfacher Weise die Hauptmenge des schwerflüchtigen Diamins aus einem Polyurethanhydrolysat abtrennen und sublimationsfrei oberhalb des Schmelzpunktes kondensieren läßt, wobei ein aminarmes Hydrolysat mit einem $NH_2$-Restgehalt unter 1 Gew.-% anfällt, welches in bekannter Weise der Aminhydrochlorid-Fällung unterworfen werden kann und direkt (in einstufiger Fällung) einen praktisch aminfreien, wiederverschäumbaren Polyether liefert.

Neben der gegenüber der DE-Offenlegungsschrift 2 854 940 vereinfachten technischen Handhabung weist das erfindungsgemäße Verfahren, das natürlich auch auf $C_4$-Polyether anwendbar ist, noch die folgenden wirtschaftlichen Vorzüge auf :

1) für die Abtrennung der Hauptmenge des Diamins im Schlangenrohrverdampfer wird im wesentlichen die dem Hydrolysat vom vorgehenden Spaltprozeß innewohnende Restwärme herangezogen, so daß praktisch keine zusätzliche Verdampfungsenergie aufgebracht werden muß ;

2) die mit Hilfe des Schlangenrohrverdampfers abgetrennte Hauptmenge des Diamins fällt in Form der freien Base an und kann direkt in den Phosgenierungsprozeß, d. h. in die Diisocyanatproduktion zurückgeführt werden ;

3) aufgrund der vorabgetrennten Diamin-Hauptmenge reduziert sich der Chlorwasserstoffbedart tur die Aminhydrochloridfällung je nach Hydrolysatzusammensetzung um 60-95 % bei entsprechenden Einsparung an Alkali- bzw. Erdalkalihydroxid bzw. -oxid für die Rückgewinnung der freien Base aus dem Aminsalz und entsprechend reduzierter Umweltbelastung durch Alkali- bzw. Erdalkalisalze im Verfahren.

Andererseits mußte nach dem Stand der Technik, insbesondere aufgrund der Lehre der DE-Offenlegungsschrift 2 755 089 davon ausgegangen werden, daß bei Mitverwendung hochsiedender Lösungsmittel als Treibdampf störende Restmengen dieser Lösungsmittel im Polyether verbleiben würden. Es war daher höchst überraschend und unerwartet, daß in Gegenwart der schwerer flüchtigen Diamine eine quantitative Trennung des mitverwendeten hochsiedenden Lösungsmittels vom Rohpolyether erfolgt, wobei gleichzeitig eine deutliche Erhöhung der ausgedampften Diaminmenge beobachtet wird. Auch diese Verfahrensvariante ist frei von störender Diaminsublimation.

Das weniger als 1 % $NH_2$-enthaltende Polyether-Rohhydrolysat wird in der Stufe 2 des erfindungsgemäßen Verfahrens durch Einleiten von Chlorwasserstoffgas weiterbehandelt.

Die Chlorwasserstoffeinleitung kann prinzipiell direkt in das weniger als 1 % $NH_2$ enthaltende Rohhydrolysat erfolgen ; vorteilhafter ist jedoch eine vorherige Verdünnung des Hydrolysats mit einer etwa gewichtsgleichen Menge eines inerten, organischen Lösungsmittels, z. B. Petrolether, Cyclohexan, Methylenchlorid, Benzol, Toluol, Xylol, Chlorbenzol usw. Ein besonders geeignetes Verdünnungsmittel ist Toluol. Die Arbeitstemperatur kann praktisch beliebig zwischen Raumtemperatur und Siedepunkt des Verdünnungsmittels gewählt werden. Besonders geeignet ist im Hinblick auf eine gut filtrierbare Aminsalzlösung ein Arbeitsbereich zwischen 70 °C und 90 °C. Das Abfiltrieren des ausgefällten Aminsalzes und die Befreiung des Regeneratpolyethers von inertem Lösungsmittel (z. B. Toluol) und eventuell überschüssigem Chlorwasserstoff erfolgt unter vermindertem Druck nach üblichen Verfahrensweisen.

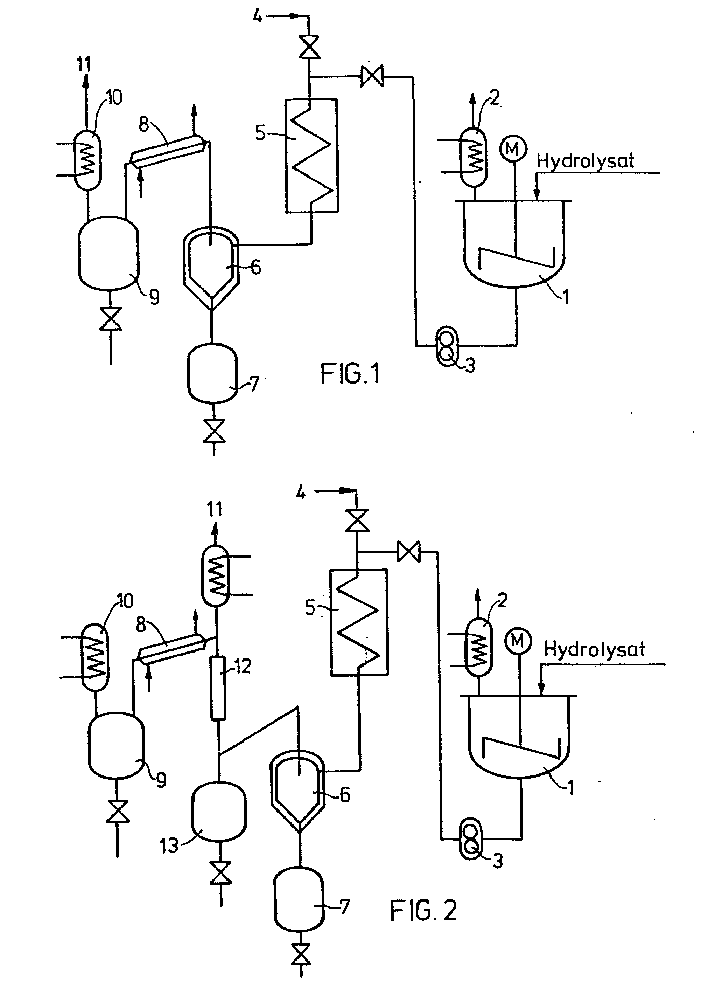

Die folgenden Beispiele dienen der näheren Erläuterung des erfindungsgemäßen Verfahrens. Die erfindungsgemäß eingesetzte Verdampferapparatur ist in Figur 1 schematisch dargestellt. Figur 2 zeigt die Apparatur bei Mitverwendung hochsiedender Lösungsmittel. Das verwendete Schlangenrohr hatte eine Länge von 12 m und einen Innenrohrdurchmesser von 18 mm.

## Beispiel 1

(Erfindungsgemäßes Verfahren ohne hochsiedendes Lösungsmittel)

Zerkleinerte Abfälle eines handelsüblichen Polyurethan-Weichschaums auf der Basis Polyether (ein auf Trimethylolpropan mit Propylenoxid und anschließend mit Ethylenoxid (ca. 15 Gew.-%) hergestellter trifunktioneller Copolyether mit einer OH-Zahl von 33-37) und Toluylendiisocyanat wurden mit einem Durchsatz von 40 kg/h gemäß der DE-Offenlegungsschrift 2 442 387 in einer Schneckenmaschine (Typ ZDS-KG 90 der Firma Werner & Pfleiderer) kontinuierlich hydrolysiert. Das die Schneckenapparatur mit einer Temperatur von 209 °C und einem Amingehalt von 4,98 % $NH_2$ verlassende Hydrolysat wurde über ein Puffergefäß (1) mit Rührer (M) auf ungefähr 500 mbar entspannt, wobei überschüssiger Wasserdampf und Kohlendioxid über eine Belüftung (2) entweichen konnten, und mit Hilfe einer Pumpe (3) kontinuierlich einem auf 230 °C beheizten Schlangenrohrverdampfer (5) zugeführt, an dessen Ende ein Vakuum von 7 mbar anlag. Über einen ebenfalls auf 230 °C beheizten Zyklon (6) entwich die Hauptmenge des Toluylendiamins und wurde nach Verflüssigung in einem auf 100 °C gehaltenen Kondensator (8) in einer Vorlage (9), die mit einem Kühler (10) und einer Vakuumpumpe (11) verbunden war, aufgefangen. Der in der Vorlage (7) aufgefangene Rohpolyether hatte sich durch die Verdampfung des Diamins auf 172 °C abgekühlt und wies einen Amingehalt von nur noch 0,78 % $NH_2$ auf (Aminabnahme 84,3 %).

In den kontinuierlich aus der Vorlage (7) ausgetragenen und mit der etwa gewichtsgleichen Menge Toluol verdünnten Rohpolyether wurde bei 80 °C bis zur vollständigen Aminsalzfällung Chlorwasserstoffgas eingeleitet. Das Aminhydrochlorid wurde abfiltriert und mit wenig wasserfreiem Toluol nachgewaschen. Die vereinigten Filtrate wurden sodann am Vakuumverdampfer von Toluol und überschüssigem Chlorwasserstoff befreit (vgl. Fig. 1).

Es wurde ein Polyether mit folgenden Analysendaten erhalten :

| | |
|---|---|
| Hydroxylzahl : | 35,0 |
| Säurezahl : | 0,1 |
| $H_2O$ : | 0,07 % |
| $NH_2$ : | 0,012 % |
| pH : | 6,2 |

## Beispiel 2 (Vergleich)

Es wurde in allen Einzelheiten wie in Beispiel 1 verfahren, jedoch wurde zusätzlich über ein Drosselventil (4) 5 Gew.-% Wasserdampf, bezogen auf die Hydrolysatmenge, als Treibmittel entsprechend DE-Offenlegungsschrift 2 755 089 eingespeist. Der ursprünglich 7 mbar betragende Druck am Ende des Schlangenrohrverdampfers stieg nach Zugabe des Wasserdampfes auf 48 mbar an. Zusätzlich machte sich im Gegensatz zur Versuchsausführung in Beispiel 1 eine störende Toluylendiaminsublimation in der Vakuumleitung bemerkbar. Der in der Vorlage (7) aufgefangene Rohpolyether wies einen Amingehalt von noch 1,52 % $NH_2$ auf (Aminabnahme nur 69,5 %).

## Beispiel 3

(Schaumstoffbildung aus Regeneratpolyether)

    100,0  Gew.-Teile Regeneratpolyether aus Beispiel 1
      3,2  Gew.-Teile Wasser
     36,6  Gew.-Teile Toluylendiisocyanat (65/35)
      4,0  Gew.-Teile Frigen ® R 11
      0,24 Gew.-Teile Desmorapid SO
      0,24 Gew.-Teile Dabco 33 LV
      0,4  Gew.-Teile Stabilisator OS 22

wurden mit einem Schnellrührer vermischt und in eine Pappform von 20 × 20 cm ausgegossen. Es wurde ein einwandfreier Schaum mit gleichmäßiger Zellstruktur erhalten, der im Vergleich zu einem Originalschaum aus reinem Polyether, wie er zur Herstellung des Polyurethanschaums von Beispiel 1 verwendet worden war, folgende Werte aufwies :

|  | Regenerat-Schaum | Original-Schaum |
|---|---|---|
| Startzeit (sec.) | 16,5 | 17,5 |
| Steigzeit (sec.) | 91 | 94 |
| Rohdichte (kg/m³) | 33,6 | 34,3 |
| Zugfestigkeit (KPa) | 125 | 162 |
| Bruchdehnung (%) | 200 | 287 |
| Stauchhärte (KPa) | 4,7 | 4,6 |

Beispiel 4

(Vergleich ohne Schlangenrohrverdampfung)

Das einen Amingehalt von 4,98 % $NH_2$ aufweisende Hydrolysat wurde ohne Vorverdampfung direkt mit der etwa gewichtsgleichen Menge Toluol verdünnt, durch 30-minütiges Erhitzen an einem Azeotropabscheider nachentwässert und bei 80 °C so lange mit gasförmigem Chlorwasserstoff versetzt, bis kein Hydrochlorid mehr ausfiel. Das Hydrochlorid wurde abfiltriert und mit wenig wasserfreiem Toluol gewaschen. Die vereinigten Filtrate wurden sodann im Vakuumverdampfer von Toluol und überschüssigem Chlorwasserstoff befreit.

Der erhaltene Polyether ergab folgende Analysendaten :

Hydroxylzahl : 37,2
Säurezahl : 1,6 (!)
$H_2O$ : 0,06 %
$NH_2$ : 0,37 % (!)

Eine einwandfreie Verschäumung des Regeneratpolyethers entsprechend dem Beispiel 3 war nicht möglich ; es wurde ein völlig unbrauchbarer Schaumstoff mit hohem Schrumpf und unregelmäßiger Porenstruktur erhalten.

Beispiel 5

(Erfindungsgemäßes Verfahren mit hochsiedendem Lösungsmittel)

Zerkleinerte Abfälle eines handelsüblichen Polyurethan-Weichschaums von Beispiel (1) auf Basis von Toluylendiisocyanat wurden mit einem Durchsatz von (a) 40 kg/h, (b) 60 kg/h und (c) 80 kg/h gemäß der DE-Offenlegungsschrift 2 442 387 in einer Schneckenmaschine (Typ ZDS-KG 90 der Firma Werner & Pfleiderer) kontinuierlich hydrolysiert. Das die Schneckenapparatur mit einer Temperatur von 210-220 °C und einem Amingehalt von 4,92 % $NH_2$ verlassende Hydrolysat wurde über ein Puffergefäß (1) (vgl. Fig. 2) auf etwa 50 mbar entspannt, wobei überschüssiger Wasserdampf sowie Kohlendioxid über eine Belüftung (2) entweichen konnten, und mit Hilfe einer Pumpe (3) kontinuierlich einem auf 230 °C beheizten Schlangenrohrverdampfer (5) zugeführt, an dessen Ende ein Vakuum (11) von 7 mbar anlag.

Gleichzeitig wurden über ein Ventil (4) 5 Gew.-% Ethylenglykol, bezogen auf die Hydrolysatmenge, in den Schlangenrohrverdampfer eingedüst.

Unterhalb eines ebenfalls auf 230 °C beheizten Zyklons (6) wurde aminarmer, weniger als 1 Gew.-% $NH_2$ aufweisender Rohpolyether in einer Vorlage (7) aufgegangen, während die Hauptmenge des Toluylendiamins und die Gesamtmenge des mitverwendeten Ethylenglykols dampfförmig über Kopf des Zyklons entwichen. Über eine auf 100-120 °C temperierte Kolonne (12) wurde flüssiges Toluylendiamin, welches in einer Vorlage (13) aufgefangen wurde, von dampfförmigem Ethylenglykol getrennt, welches über einen nachgeschalteten Kühler (8) einer Vorlage (9) zugeführt wurde.

Der in der Vorlage (7) aufgegangene Rohpolyether wies in Abhängigkeit vom Durchsatz folgende Amin-Restgehalte auf (siehe Versuche 5a, 5b, 5c in Tabelle auf Seite 20).

Alle drei Rohpolyetherproben wiesen weniger als 1 Gew.-% $NH_2$ auf und konnten direkt der quantitativen Aminhydrochloridfällung unterworfen werden. Verfährt man gleichartig, jedoch ohne Zusatz von Ethylenglykol als hochsiedendes Lösungsmittel, so erhält man im Rohpolyether folgende Ergebnisse bezüglich Amingehalten (siehe Versuche 5a/1, 5b/1 und 5c/1 in Tabelle auf Seite 20).

Beispiel 6

In die vereinigten Rohpolyether (a) bis (c) des Beispiels 5 wurde nach Verdünnung mit einer etwa

0 047 913

gewichtsgleichen Menge Toluol bei 80 °C bis zu vollständigen Aminsalzfällung Chlorwasserstoffgas eingeleitet. Das Aminhydrochlorid wurde abfiltriert und mit wenig wasserfreiem Toluol nachgewaschen. Die vereinigten Filtrate wurden sodann am Vakuumverdampfer von Toluol und überschüssigem Chlorwasserstoff befreit.

Es wurde ein einwandfrei verschäumbarer Polyether mit folgenden Analysendaten erhalten :

| | |
|---|---|
| Hydroxylzahl : | 34,8 |
| Säurezahl : | 0,21 |
| $H_2O$ : | 0,02 % |
| $NH_2$ : | 0,008 % |
| pH : | 5,1 |

| Versuch | Durchsatz (kg/h) | Vakuum*) (mbar) | Amin-Ausg.- Wert (% $NH_2$) | Amin-Reste- halt (% $NH_2$) | Aminab- nahme (%) |
|---|---|---|---|---|---|
| 5 a | 40 | 8 | 4,92 | 0,41 | 91,7 |
| 5 b | 60 | 9 | 4,92 | 0,55 | 88,8 |
| 5 c | 80 | 10 | 4,92 | 0,67 | 86,4 |

Vergleiche ohne Ethylenglykol-Treibmittelzusatz : (Versuche 5 a/1 bis 5 c/1)

| | | | | | |
|---|---|---|---|---|---|
| 5 a/1 | 40 | 7 | 4,98 | 0,78 | 84,3 |
| 5 b/1 | 60 | 8 | 4,98 | 0,99 | 80,1 |
| 5 c/1 | 80 | 9 | 4,98 | 1,00 | 80,0 |
| 7 a | 40 | 9 | 4,99 | 0,42 | 91,6 |
| 7 b | 60 | 9 | 4,99 | ·,61 | 87,8 |
| 7 c | 80 | 10 | 4,99 | 0,74 | 85,2 |

*) bei Versuchen 5 a-c und 7 a-c nach Glykol-Einspeisung

## Beispiel 7

Es wurde analog zu Beispiel 5 verfahren, jedoch wurden über das Ventil (4) 5 Gew.-% Diethylenglykol, bezogen auf die Hydrolysatmenge, anstelle des Ethylenglykols in den Schlangenrohrverdampfer eingedüst.

Der in der Vorlage (7) aufgefangene Rohpolyether wies in Abhängigkeit vom Durchsatz folgende Amin-Restgehalte auf (siehe Versuche 7a, 7b und 7c in Tabelle auf Seite 20).

## Beispiel 8

Zerkleinerte Abfälle vergilbungsfreier Polyurethan-Weichschaumstoffe auf der Basis eines durch Anlagerung von Ethylenoxid/Propylenoxid (10 : 90) an ein Gemisch von Trimethylolpropan und Propylenglykol (85 : 15) erhaltenen Polyethers vom mittleren Molekulargewicht 3 100 und (a) Isophorondiisocyanat, (b) Hexamethylendiisocyanat sowie (c) 4,4'-Dichlohexylmethandiisocyanat wurden unter den in Beispiel 5 genannten Bedingungen bei Durchsatzmengen von jeweils 40 kg/h in einer Schneckenmaschine hydrolysiert und nach Vorentspannung auf etwa 500 mbar kontinuierlich einem Schlangenrohrverdampfer zugeführt. Betriebsbedingungen und Trennwirkung des Schlangenrohrverdampfers gehen aus der Tabelle auf Seite 22 hervor. Die aus der Vorlage (7) entnommenen Rohpolyether wurden gemäß Beispiel 6 von Restamin befreit. Es wurden einwandfreie verschäumbare Regeneratpolyether mit folgenden Analysedaten erhalten :

(Siehe Tabelle, Seite 8 f.)

7

Versuchsbedingungen/Rohpolyether

| Versuch | Ethylenglykol-Zusatz (%) | Betriebsbedingungen (Schlangenrohr/Zyklus) | | Amin-Ausg.-Wert (% $NH_2$) | Amin-Rest-gehalt (% $NH_2$) | Aminab-nahme (%) |
|---|---|---|---|---|---|---|
| | | Vakuum (mbar) | Temperatur (%) | | | |
| 8 a | 5 | 9 | 230 | 5,0 | 0,47 | 90,6 |
| 8 b | – | 10 | 230 | 5,3 | 0,31 | 94,2 |
| 8 c | 5 | 6 | 245 | 4,9 | 0,89 | 81,8 |

Eigenschaften der regenerierten Polyether

| Versuch | Hydroxyl-zahl | Säure-zahl | $NH_2$ (%) | $H_2O$ (%) | pH | Viskosität (mPa.s./80°C) |
|---|---|---|---|---|---|---|
| 8 a | 48,5 | 0,5 | 0,02 | 0,03 | 6,7 | 56,4 |
| 8 b | 45,0 | 0,2 | 0,01 | 0,04 | 6,5 | 58,8 |
| 8 c | 46,3 | 0,2 | 0,02 | 0,04 | 6,2 | 56,4 |

Beispiel 9

Abfälle eines zelligen Polyurethan-Elastomeren auf der Bais (a) eines Polyethergemisches der mittleren Hydroxylzahl 30 ± 3, bestehend aus einem linearen, auf Propylenglykol gestarteten Polyether vom mittleren Molekulargewicht 4 000 mit 80 % Propylenglykol- und 20 % Ethylenglykolether-Einheiten und einem trifunktionellen, auf Trimethylolpropan gestarteten Polyether vom mittleren Molekulargewicht 4 800 mit 85 % Propylenglykol- und 15 % Ethylenglykolether-Einheiten, (b) 4,4'-Diphenylmethandiisocyanat und (c) Butandiol-1,4 wurden mit einem Durchsatz von 30 kg/h gemäß der DE-Offenlegungsschrift 2 442 387 in einer Schneckenmaschine (Typ ZDS-KG 90 der Firma Werner & Pfleider) kontinuierlich hydrolysiert. Das die Schneckenapparatur mit einer Temperatur von 250 °C verlassende, dünnflüssige Hydrolysat enthielt neben den Ausgangspolyethern 9,5 Gew.-% Butandiol-1,4 und 24,7 Gew.-% (entsprechend 3,99 % $NH_2$) 4,4'-Diaminodiphenylmethan. Es wurde zur Entfernung leichtflüchtiger Anteile ($H_2O$, $CO_2$) über ein Puffergefäß (1) auf ungefähr 500 mbar entspannt und dann kontinuierlich einem auf 280 °C beheizten Schlangenrohrverdampfer (5) zugeführt, an dessen Ende ein Vakuum von 1 mbar anlag. Über ein auf ebenfalls 280 °C beheiztes Zyklon entwichen die Hauptmenge des Diaminodiphenylmethans und die Gesamtmenge des gleichzeitig als Treibgas wirkenden Butandiols.

Das Diaminodiphenylmethan wurde in einer beheizten Vorlage (13) oberhalb seines Schmelzpunktes kondensiert, während das Butandiol kontinuierlich über eine Fraktionierkolonne (12) abgetrennt und über einen Kondensator (8) einer Vorlage (9) zugeführt.

Das in der Vorlage (7) aufgefangene Rohpolyethergemisch wies einen Amin-Restgehalt von 0,98 % $NH_2$ auf, entsprechend einer Aminabnahme von 75,4 %.

Der Rohpolyether wurde gemäß Beispiel 6 von Restamin befreit und lieferte einen recyclierbaren Regeneratpolyether mit folgenden Analysendaten :

| | |
|---|---|
| Hydroxylzahl : | 33,5 |
| Säurezahl : | 0,2 |
| $NH_2$ : | 0,007 % |
| $H_2O$ : | 0,03 % |
| pH : | 6,3 |
| Viskosität : | 93,1 (80 °C) |

**Ansprüche**

1. Verfahren zur Auftrennung von Polyurethan-Hydrolysaten, vorzugsweise Polyurethanschaumstoff-Hydrolysaten, in praktisch aminfreie, verschäumbare Polyether und Diamine, dadurch gekennzeichnet, daß man

A) das in einer kontinuierlich arbeitenden Schneckenmaschine erhaltene, heiße Polyurethan-

Hydrolysat kurz auf Normaldruck oder in Vakuum entspannt und ohne Mitverwendung leicht flüchtiger Komponenten, jedoch gegebenenfalls unter Zugabe von 1 bis 15 Gew.-% eines hochsiedenden Lösungsmittels, dessen Siedepunkt 50 bis 150 °C unterhalb des Siedepunktes des auszudampfenden Diamins liegt und dessen Dampfdruck bei der Kondensationstemperatur des auszudampfenden Diamins das 10-fache des in der Verdampferanlage angestrebten Betriebsdruckes nicht überschreitet unmittelbar und vorzugsweise kontinuierlich in einen auf 180 bis 300 °C beheizten Schlangenrohrverdampfer einspeist, an dessen Ende ein Druck von 0,1 bis 20 mbar anliegt ; in einem nachgeschalteten Zyklon das nunmehr weniger als 1 Gew.-% $NH_2$ enthaltende Hydrolysat von der Hauptmenge des verflüchtigten Diamins und der Gesamtmenge des mitverwendeten Lösungsmittels, sowie über eine anschließende Destillationskolonne gegebenenfalls ohne weitere Wärmezufuhr das Diamin von mitverwendeten Lösungsmittel trennt,

B) durch Einleitung von überschüssigem Chlorwasserstoff in das gegebenenfalls mit inerten Lösungsmitteln verdünnte, weniger als 1 Gew.-% $NH_2$ enthaltende Hydrolysat noch vorhandenes Diamin quantitativ als Hydrochlorid ausfällt und

C) nach Abfiltrieren des ausgefällten Aminsalzes den gewonnenen Regeneratpolyether unter vermindertem Druck von inertem Lösungsmittel und überschüssigem Chlorwasserstoff befreit.

2. Verfahren nach Anspruch 1, dadurch gekennzeichnet, daß am Ende des Schlangenrohrverdampfers ein Druck von 1 bis 10 mbar anliegt.

3. Verfahren nach Anspruch 1-2, dadurch gekennzeichnet, daß man 3 bis 6 Gew.-% eines hochsiedenden Lösungsmittels verwendet, dessen Siedepunkt 80 bis 120 °C unterhalb des Siedepunktes des auszudampfenden Amins liegt und dessen Dampfdruck bei der Kondensationstemperatur des auszudampfenden Amins das 2-fache des in der Verdampferanlage angestrebten Betriebsdruckes nicht überschreitet.

4. Verfahren nach Anspruch 1-3, dadurch gekennzeichnet, daß man das über ein Zyklon abgetrennte Dampfgemisch aus Diamin und hochsiedendem Lösungsmittel ohne weitere Energiezufuhr über eine nachgeschaltete Destillationskolonne kontinuierlich auftrennt und das Lösungsmittel in den Verfahrensprozeß zurückleitet.

5. Verfahren nach Anspruch 2-4, dadurch gekennzeichnet, daß man das Hydrolysat in einen auf 200 bis 250 °C beheizten Schlangenrohrverdampfer, an dessen Ende ein Druck von 1 bis 10 mbar anliegt, einspeist.

6. Verfahren nach Anspruch 1-5, dadurch gekennzeichnet, daß man als hochsiedende Lösungsmittel Ethylenglykol, Diethylenglykol, 1,2-Propylenglykol, Trimethylenglykol, Butandiol und Anilin verwendet.

7. Verfahren nach Anspruch 1-6, dadurch gekennzeichnet, daß man als inertes Lösungsmittel bei der Diaminhydrochloridfällung Toluol verwendet.

8. Verfahren nach Anspruch 1-7, dadurch gekennzeichnet, daß man Polyurethanhydrolysate auf der Basis von Polyurethanen aus Polyethern und Toluylendiisocyanat, Diphenylmethan-2,4' und/oder -4,4'-diisocyanat, Hexan-1,6-diisocyanat, Dicyclohexylmethandiisocyanat oder Isophorondiisocyanat verwendet.

9. Verfahren nach Anspruch 8, dadurch gekennzeichnet, daß man Polyurethan-Schaumstoffhydrolysate auf der Basis von Polyurethanen aus Polyethern und Toluylendiisocyanat verwendet.

## Claims

1. Process for separating polyurethane hydrolysates, preferably polyurethane foam hydrolysates, into substantially amine-free foamable polyethers and diamines, characterised in that

A) the hot polyurethane hydrolysate obtained in a continuously operating screw extruder is briefly expanded to normal pressure or in vacuo and, without using readily volatile components, but optionally with the addition of 1 to 15 % by weight of a high-boiling solvent of which the boiling point is 50 to 150 °C below the point of the diamine to be eliminated by evaporation and of which the vapour pressure at the condensation temperature of the diamine to be eliminated by evaporation does not exceed 10 times the operating pressure required in the evaporation unit, is fed directly and preferably continuously into a tubular coil evaporator which is heated to 180 to 300 °C and at the end of which a pressure of 0.1 to 20 mbar is applied ; the hydrolysate now containing less than 1 % by weight of $NH_2$ is separated in a following cyclone from most of the diamine evaporated and all the solvent used, and the diamine is separated from the solvent used in a following distillation column, optionally without any further heat input,

B) any diamine still present is quantitatively precipitated in the form of its hydrochloride by introducing excess hydrogen chloride into the hydrolysate optionally diluted with inert solvents and containing less than 1 % by weight of $NH_2$ and

C) the regenerated polyether obtained after removal by filtration of the precipitated amine salt is freed under reduced pressure from inert solvent and excess hydrogen chloride.

2. Process according to Claim 1, characterised in that a pressure of 1 to 10 mbar is applied at the end of the tubular coil evaporator.

3. Process according to Claim 1-2, characterised in that 3 to 6 % by weight of a high-boiling solvent is used of which the boiling point is 80 to 120 °C below the boiling of the amine to be removed by evaporation and of which the vapour pressure at the condensation temperature of the amine to be removed by evaporation does not exceed twice the operating pressure required in the evaporation unit.

4. Process according to Claim 1-3, characterised in that the vapour mixture of diamine and high-boiling solvent separated off via a cyclone is continuously separated in a following distillation column without any further input of energy and the solvent is returned to the process.

5. Process according to Claim 2-4, characterised in that the hydrolysate is introduced into a tubular coil evaporator which has been heated to 200-250 °C and at the end of which a pressure of 1 to 10 mbar is applied.

6. Process according to Claim 1-5, characterised in that ethylene glycol, diethylene glycol, 1,2-propylene glycol, trimethylene glycol, butane diol and aniline are used as high-boiling solvents.

7. Process according to Claim 1-6, characterised in that toluene is used as the inert solvent for precipitation of the diamine hydrochloride.

8. Process according to Claim 1-7, characterised in that polyurethane hydrolysates based on polyurethanes of polyethers and tolylene diisocyanate, diphenyl methane-2,4'- and/or -4,4'-diisocyanate, hexane-1,6-diisocyanate, dicyclohexyl methane diisocyanate or isophorone diisocyanate are used.

9. Process according to Claim 8, characterised in that polyurethane foam hydrolysates based on polyurethanes of polyethers and tolylene diisocyanate are used.

## Revendications

1. Procédé pour la séparation d'hydrolysats de polyuréthanes, de préférence d'hydrolysats de matières cellulaires de polyuréthanes, en polyéthers moussables pratiquement exempts d'amine et en diamines, caractérisés en ce que

A) on détend l'hydrolysat de polyuréthane chaud, obtenu dans une machine à vis sans fin fonctionnant en continu, en peu de temps à la pression normale ou sous vide, et, sans utilisation conjointe de composants aisément volatils mais éventuellement avec addition de 1 à 15 % en poids d'un solvant à point d'ébullition élevé dont le point d'ébullition est de 50 à 150 °C inférieur au point d'ébullition de la diamine à éliminer par évaporation et dont la tension de vapeur à la température de condensation de la diamine à éliminer par évaporation ne dépasse pas 10 fois la pression opératoire recherchée dans l'installation d'évaporation, on l'alimente directement et de préférence continuellement dans un évaporateur tubulaire à serpentin chauffé à 180-300 °C, à l'extrémité duquel règne une pression de 0,1 à 20 mbars, on sépare dans un cyclone raccordé à la suite de celui-ci l'hydrolysat, qui ne contient plus désormais que moins de 1 % en poids de NH₂, d'avec la quantité majeure de la diamine volatilisée et de la quantité totale du solvant utilisé conjointement, de même que, au moyen d'une colonne de distillation qui suit, on sépare éventuellement, sans apport de chaleur supplémentaire, la diamine d'avec le solvant utilisé conjointement,

B) par l'introduction d'acide chlorhydrique en excès dans l'hydrolysat contenant moins de 1% en poids de NH₂ et qui est éventuellement dilué avec des solvants inertes, on précipite quantitativement la diamine encore présente à l'état de chlorhydrate et

C) après séparation du sel d'amine précipité par filtration, on débarrasse le polyéther régénéré récupéré, sous pression réduite, du solvant inerte et de l'acide chlorhydrique en excès.

2. Procédé selon la revendication 1, caractérisé en ce qu'à l'extrémité de l'évaporateur tubulaire à serpentin règne une pression de 1 à 10 mbars.

3. Procédé selon les revendications 1 et 2, caractérisé en ce qu'on utilise 3 à 6 % en poids d'un solvant à point d'ébullition élevé dont le point d'ébullition est de 80 à 120 °C inférieur au point d'ébullition de l'amine à séparer par évaporation et dont la tension de vapeur à la température de condensation de l'amine à séparer par évaporation ne dépasse pas 2 fois la pression opératoire recherchée dans l'installation d'évaporation.

4. Procédé selon les revendications 1 à 3, caractérisé en ce qu'on sépare en continu le mélange de vapeurs, séparé au moyen d'un cyclone et consistant en une diamine et en un solvant à point d'ébullition élevé, sans autre apport d'énergie au moyen d'une colonne de distillation raccordée à la suite de celui-ci et l'on recycle le solvant au processus opératoire.

5. Procédé selon les revendications 2 à 4, caractérisé en ce qu'on alimente l'hydrolysat dans un évaporateur tubulaire à serpentin chauffé à 200-250 °C, à l'extrémité duquel règne une pression de 1 à 10 mbars.

6. Procédé selon les revendications 1 à 5, caractérisé en ce qu'on utilise en tant que solvants à point d'ébullition élevé de l'éthylène glycol, du diéthylène glycol, du 1,2-propylène glycol, du triméthylène glycol, du butane diol et de l'aniline.

7. Procédé selon les revendications 1 à 6, caractérisé en ce qu'on utilise du toluène comme solvant inerte dans la précipitation du chlorhydrate de diamine.

8. Procédé selon les revendications 1 à 7, caractérisé en ce qu'on utilise des hydrolysats de polyuréthanes à base de polyuréthanes dérivant de polyéthers et de toluylène-diisocyanate, de diphénylméthane-2,4'- et/ou -4,4'-diisocyanate, de diphénylméthane-2,4'- et/ou -4,4'-diisocyanate, d'hexane-1,6-diisocyanate, de dicyclohexylméthanediisocyanate ou d'isophorone-diisocyanate.

9. Procédé selon la revendication 8, caractérisé en ce qu'on utilise des hydrolysats de matières cellulaires en polyuréthanes à base de polyuréthanes dérivant de polyéthers et de toluylène-diisocyanate.

FIG.1

FIG. 2